# DEMANDE DE BREVET EUROPEEN

(11) **EP 1 318 030 A1**
(43) Date de publication de la demande: **11.06.2003**
(21) Numéro de dépôt: 02026063.4
(22) Date de dépôt: 22.11.2002
(51) Int. Cl.: B60C 15/00, B60C 15/06, B60C 15/04

(54) **Pneumatique comportant une zone d'ancrage renforcée**

(30) Priorité: 04.12.2001 FR 0115671
(71) Demandeur: Société de Technologie Michelin, 63000 Clermont-Ferrand (FR); MICHELIN RECHERCHE ET TECHNIQUE S.A., CH-1763 Granges-Paccot (CH)
(72) Inventeur: Prost, Pascal, 63200 Riom (FR); Colas des Francs, Gilles, 6300 Clermont-Ferrand (FR)
(74) Mandataire: Dequire, Philippe

(57) **Abrégé**

Pneumatique pour véhicule à deux roues comportant :
- au moins une structure de renfort de type carcasse ancrée de chaque côté du pneumatique dans un bourrelet dont la base est destinée à être montée sur un siège de jante, chaque bourrelet se prolongeant radialement vers l'extérieur par un flanc, la structure de renfort s'étendant circonférentiellement depuis les bourrelets vers lesdits flancs, les flancs rejoignant radialement vers l'extérieur une bande de roulement dont le rapport Ht/Wt est supérieur à 0.15 ;
- une zone d'ancrage de la structure de renfort comprenant au moins un alignement de fils sensiblement circonférentiels coopérant d'une part avec une première portion de structure de renfort de type carcasse disposée axialement adjacente audit alignement de fils d'un premier côté dudit alignement, et d'autre part avec une seconde portion de structure de renfort de type carcasse disposée axialement adjacente audit alignement de fils d'un second côté dudit alignement.

## Description

La présente invention concerne les pneumatiques. Plus particulièrement, elle concerne un pneumatique, notamment pour véhicule de type deux roues, comportant une zone d'ancrage renforcée.

Le renforcement des pneumatiques est à l'heure actuelle constitué par une ou plusieurs nappes désignées classiquement « nappes carcasses », «nappes sommet », etc. Cette façon de désigner les renforts provient du procédé de fabrication, consistant à réaliser une série de produits semi-finis en forme de nappes, pourvues de renforts filaires souvent longitudinaux, qui sont par la suite assemblées afin de confectionner un pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Ce même procédé classique implique l'utilisation d'une tringle, utilisée pour réaliser l'ancrage ou le maintien de la nappe carcasse dans la zone basse du flanc. Ainsi, classiquement, on effectue un retournement d'une portion de nappe autour d'une tringle disposée dans le bourrelet du pneumatique. On crée de la sorte un ancrage de la nappe carcasse dans le bourrelet.

La généralisation dans l'industrie de ce procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Cependant, il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les fils des différentes structures de renfort sont appliqués directement sur les couches adjacentes de mélanges caoutchoutiques, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchoutiques et les renforts sous forme de filaments, sont directement appliqués sur le noyau. Ce noyau étant de forme toroïdale, on a plus à former l'ébauche pour passer d'un profil plat à un profil sous forme de tore.

Par ailleurs, les pneumatiques décrits dans ce document ne disposent pas du traditionnel retournement de nappe carcasse autour d'une tringle. Ce type d'ancrage est remplacé par un agencement dans lequel on dispose de façon adjacente à ladite structure de renfort de flanc des filaments circonférentiels, le tout étant noyé dans un mélange caoutchoutique d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou de renforts sous forme de filaments.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les fils de renforts d'une nappe carcasse dans le procédé classique, et les fils correspondants, en général appliqués au niveau des flancs, d'un pneumatique produit selon un procédé sans semi-finis. Le terme «zone d'ancrage» pour sa part, peut désigner tout autant le traditionnel retournement de nappe carcasse autour d'une tringle d'un procédé classique, que l'ensemble formé par les filaments circonférentiels, le mélange caoutchoutique et les portions adjacentes de renfort de flanc d'une zone basse réalisée avec un procédé avec application sur un noyau toroïdal.

L'invention prévoit un pneumatique pour véhicule à deux roues comportant :
- au moins une structure de renfort de type carcasse ancrée de chaque côté du pneumatique dans un bourrelet dont la base est destinée à être montée sur un siège de jante, chaque bourrelet se prolongeant radialement vers l'extérieur par un flanc, la structure de renfort s'étendant circonférentiellement depuis les bourrelets vers lesdits flancs, les flancs rejoignant radialement vers l'extérieur une bande de roulement dont le rapport Ht/Wt est supérieur à 0.15 ;
- une zone d'ancrage de la structure de renfort comprenant au moins un alignement de fils sensiblement circonférentiels coopérant d'une part avec une première portion de structure de renfort de type carcasse disposée axialement adjacente audit alignement de fils d'un premier côté dudit alignement, et d'autre part avec une seconde portion de structure de renfort de type carcasse disposée axialement adjacente audit alignement de fils d'un second côté dudit alignement.

On obtient ainsi un pneumatique, notamment un pneumatique pour véhicule de type deux roues, offrant un ancrage performant, fiable et durable de la structure de renfort dans le bourrelet. Le fait de disposer les alignements sensiblement entre au moins deux portions de renfort de type carcasse contribue notamment à pérenniser ces différentes propriétés.

Selon une variante avantageuse de l'invention, au moins une portion des fils dudit alignement et une portion sensiblement voisine des portions de structure coopèrent grâce à la présence d'un mélange caoutchoutique d'ancrage coopérant au moins partiellement avec chacun de ces éléments. Le mélange d'ancrage peut avantageusement être un mélange à sensiblement haut module d'élasticité.

Le ou les alignements peuvent comprendre un seul ou encore plusieurs fils et former une seule ou plusieurs piles.

Selon un mode de réalisation avantageux, le pneumatique comporte une seule structure de renfort de type carcasse se séparant en portions axialement et circonférentiellement espacées au niveau du bourrelet de façon à sensiblement entourer de part et d'autre les alignements. Selon un autre mode de réalisation, on retrouve deux structures de renfort de type carcasse disposées, au moins au niveau du bourrelet, avec un espacement axial entre les deux, dans lequel est disposé au moins une portion des alignements.

Au moins une pile peut comporter des fils de différents types. On entend par là de fils de différents matériaux, et/ou diamètres, etc.

De manière avantageuse, ladite zone d'ancrage comprend au moins un fil aligné sensiblement circonférentiellement, ou une série de fils alignés et répartis circonférentiellement. De préférence, l'angle des fils est sensiblement de 0° par rapport à la direction circonférentielle. Les fils forment ainsi des alignements pouvant prendre une multiplicité de formes. Les alignements de fils peuvent également être agencés et fabriqués de plusieurs façons. Par exemple, un alignement peut avantageusement être constitué d'un seul fil enroulé (sensiblement à zéro degré) en spirale sur plusieurs tours, de préférence depuis le plus petit diamètre vers le plus grand diamètre. Il peut également être constitué de plusieurs fils concentriques posés l'un dans l'autre, formant une superposition d'anneaux de diamètres progressivement croissants. Il n'est pas nécessaire d'ajouter un mélange de caoutchouc pour assurer l'imprégnation du fil ou des enroulements circonférentiels de fil.

Grâce à l'utilisation de différents types de fils, avec différentes propriétés ou différents matériaux, chacun à un endroit bien spécifique, on peut optimiser les caractéristiques du flanc et/ou de la zone basse du pneumatique.

Une partie ou la totalité des fils de l'alignement est avantageusement non métallique, et de préférence de type textile, tels des fils à base d'aramide, de polyester aromatique, ou encore d'autres types de fils de divers modules tels des fils à base de PET, PEN, PVA, fibre de verre, nylon, rayonne, etc, ou encore de type hybride, par exemple de type aramide/nylon.

De manière avantageuse, au moins un alignement comporte plusieurs fils dont au moins deux ont des caractéristiques différentes. On peut également prévoir des fils de nature et/ou caractéristiques différentes dans des alignements distincts.

Par caractéristiques du fil, on entend par exemple ses dimensions, sa composition, ses caractéristiques et propriétés mécaniques (notamment le module ou la ténacité), ses caractéristiques et propriétés chimiques, etc.

De manière avantageuse, les alignements de fils sont disposés de façon à être en contact avec au moins un mélange de gomme à haut module. Dans un exemple avantageux, les alignements sont entourés d'un premier côté par un premier mélange et de l'autre côté par un second mélange.

De préférence, les fils orientés circonférentiellement ne sont pas au contact direct des fils orientés radialement, par exemple ceux de la structure de type carcasse.

Tous les détails de plusieurs modes de réalisation sont donnés dans la description qui suit, complétée par les figures 1 à 5 où :
la figure 1 est une coupe radiale montrant essentiellement un flanc et un bourrelet d'une première forme d'exécution d'un pneumatique selon l'invention ;
la figure 2 est une coupe radiale montrant essentiellement un flanc et un bourrelet d'une deuxième forme d'exécution d'un pneumatique selon l'invention ;
la figure 3 est une coupe radiale montrant essentiellement un flanc et un bourrelet d'une variante de la forme d'exécution du pneumatique de la figure 1 ;
la figure 4 est une coupe radiale montrant essentiellement un flanc et un bourrelet d'une variante de la forme d'exécution du pneumatique de la figure 2 ;
la figure 5 est une coupe radiale montrant le profil d'un pneumatique pour véhicule deux roues tel une motocyclette ou un scooter, avec les dimensions associées Wt et Ht servant souvent à caractériser ce type de pneumatique.

Dans le présent mémoire, le terme "fil" ou filaire désigne en toute généralité aussi bien des monofilaments que des multifilaments, ou des assemblages comme des câbles, des retors ou bien encore n'importe quel type d'assemblage équivalent, et ceci, quels que soit la matière et le traitement de ces fils, par exemple traitement de surface ou enrobage ou préencollage pour favoriser l'adhérence sur le caoutchouc.

Pour rappel, "radialement vers le haut", ou "radialement supérieur" signifie vers les plus grands rayons.

On entend par "module d'élasticité" d'un mélange caoutchoutique, un module d'extension sécant obtenu à une déformation d'extension uniaxiale de l'ordre de 10% à température ambiante.

Une structure de renfort ou de renforcement de type carcasse sera dite radiale lorsque ses fils sont disposés à 90°, mais aussi, selon la terminologie en usage, à un angle proche de 90°.

On sait que dans la technique actuelle, la ou les nappes de carcasse sont retournées autour d'une tringle. La tringle remplit alors une fonction d'ancrage de carcasse, c'est à dire reprend la tension se développant dans les fils de carcasse sous l'effet de la pression de gonflage. Dans les configurations décrites dans la présente demande, n'utilisant avantageusement pas de tringle de type traditionnel, la fonction d'ancrage de la structure de renfort de type carcasse est également assurée.

On sait aussi que, toujours dans l'état de la technique, la même tringle assure en outre une fonction de serrage du bourrelet sur sa jante. Dans les exemples de réalisation décrits dans la présente demande n'utilisant pas de tringle de type traditionnel, la fonction de serrage est également assurée, notamment par les enroulements de fils circonférentiels les plus près du siège.

Il va sans dire que l'invention peut être utilisée en adjoignant au bourrelet ou à la zone basse du pneumatique en général d'autres éléments, comme certaines variantes vont l'illustrer. De même, l'invention peut être utilisée en multipliant les structures de renfort de même nature, ou même en adjoignant un autre type de structure de renfort.

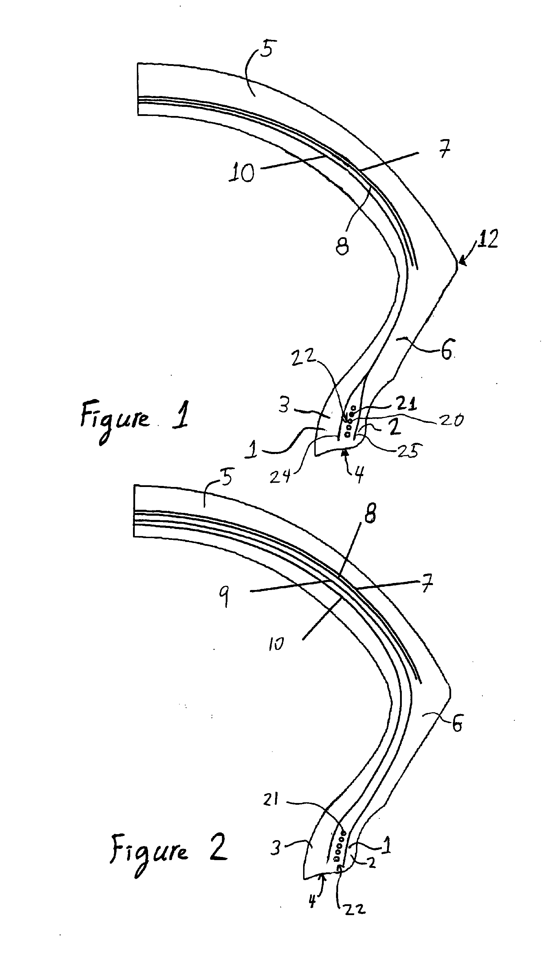

La figure 1 illustre la zone basse, notamment le bourrelet 1 d'une première forme d'exécution du pneumatique selon l'invention. Le bourrelet 1 comporte une portion axialement externe 2 prévue et conformée de façon à être placée contre le rebord d'une jante. La portion 2 se termine radialement et axialement vers l'intérieur par un siège de bourrelet 4, adapté pour être disposé contre un siège de jante. Le bourrelet comporte également une portion axialement interne 3, s'étendant sensiblement radialement depuis le siège 4 vers le flanc 6.

Le pneumatique comporte également une structure de renfort 10 ou de renforcement de type carcasse pourvue de renforts avantageusement configurés selon un agencement sensiblement radial. Cette structure peut être agencée de façon continue d'un bourrelet à l'autre, en passant par les flancs et le sommet du pneumatique, ou encore, elle peut comporter deux ou plusieurs parties, agencées par exemple le long des flancs, sans couvrir la totalité du sommet.

La région du sommet 5 comporte de préférence une structure de renfort comme par exemple un agencement de nappes 7 et 8 croisées au sommet.

Afin de positionner les fils de renforcement de façon aussi précise que possible, et pour optimiser l'efficacité de l'enroulement en faisant en sorte que les câbles soient en extension dans le pneumatique, il est très avantageux de confectionner le pneumatique sur support rigide, par exemple un noyau rigide imposant la forme de sa cavité intérieure. On applique sur ce noyau, dans l'ordre requis par l'architecture finale, tous les constituants du pneumatique, qui sont disposé directement à leur place finale, sans que le profil du pneumatique doive être modifié lors de la confection.

Des fils circonférentiels 21 agencés de préférence sous forme de piles 22, forment un agencement de fils principaux 20 ou d'ancrage, prévu dans chacun des bourrelets. Ces fils sont de préférence métalliques, et éventuellement laitonnés. Dans chaque pile, les fils sont avantageusement sensiblement concentriques et superposés.

Afin d'assurer un parfait ancrage de la structure de renfort, on réalise un bourrelet composite stratifié. A l'intérieur du bourrelet 1, entre les alignements de fil de la structure de renfort, on dispose des fils orientés circonférentiellement. Ceux-ci sont disposés en une pile comme sur les figures, ou en plusieurs piles adjacentes, ou en paquets, ou en toute disposition judicieuse, selon le type de pneumatique et/ou les caractéristiques recherchées.

Les portions d'extrémité radialement internes de la structure de renfort 10 coopèrent avec les bourrelets. Il se crée ainsi un ancrage de ces portions dans lesdits bourrelets. Afin de favoriser cet ancrage, l'espace entre les fils circonférentiels et la structure de renfort est occupé par un mélange caoutchoutique de liaison. On peut également prévoir l'utilisation de plusieurs mélanges ayant des caractéristiques différentes, délimitant plusieurs zones, les combinaisons de mélanges et les agencements résultants étant quasi-illimités. Il est toutefois avantageux de prévoir la présence d'un mélange à haut module d'élasticité dans la zone d'intersection entre l'arrangement de fils et la structure de renfort. A titre d'exemple non limitatif, le module d'élasticité d'un tel mélange peut atteindre ou même dépasser 15 ou 20 Mpa, et même dans certains cas atteindre, voire dépasser 40 Mpa.

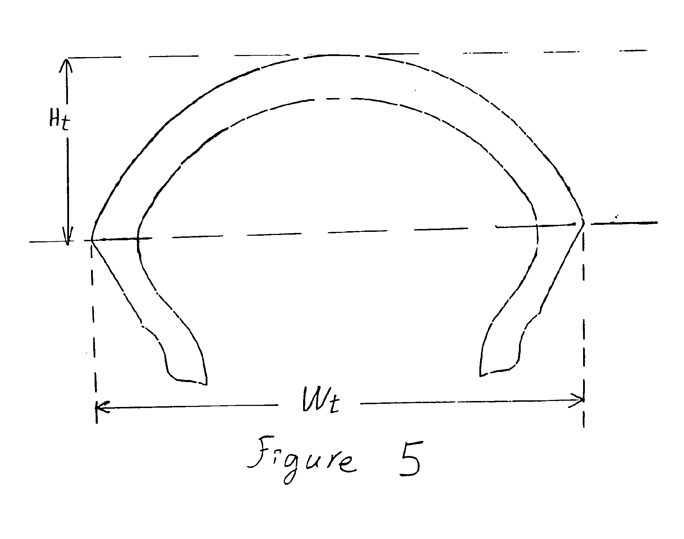

L'invention prends également en considération les importantes spécificités du pneumatique destiné à un véhicule motorisé à deux roues tel une motocyclette ou un scooter ou un vélomoteur. Par exemple, un tel pneumatique dispose habituellement d'une bande de roulement s'étendant, dans un plan méridien, entre les deux points définissant la plus grande distance axiale. Etant donné les angles fortement inclinés susceptibles d'être générés par exemple lors de virages à haute vitesse, la bande de roulement du pneumatique pour véhicule deux roues dispose également d'une forme « arquée » ou arrondie, avec un rapport Ht/Wt en général supérieur à 0.15 et de préférence supérieur à 0.3, caractéristique de ce type de pneumatique. Le rapport Ht/Wt représente le rapport entre la hauteur de la bande de roulement et sa largeur, tel qu'illustré à la figure 5. Ces caractéristiques font que, par exemple, la jonction entre le sommet et le flanc d'un pneumatique pour véhicule deux roues n'est ni positionnée ni configurée de la même façon que pour un pneumatique pour véhicule à quatre roues ou plus.

Pour un véhicule à deux roues, la zone de contact entre le sol et le pneumatique est sensiblement étroite par rapport à la largeur de la bande de roulement. Cette zone est par ailleurs mobile le long du profil de la bande de roulement, en fonction de l'inclinaison de la motocyclette. Cela est d'autant plus important que les contraintes dynamiques différent fortement entre les véhicules à deux roues et les autres types de véhicules. Cela justifie par exemple la présence de pneumatique différents pour la roue avant et la roue arrière d'un nombre important de motocyclettes.

Dans l'exemple de la figure 1, au niveau du bourrelet, la structure de renfort 10 se sépare en au moins deux sections axialement et circonférentiellement espacées. Une première section 24 du côté axialement interne, et une seconde section 25 du côté axialement externe. Ces sections séparées en bourrelet sont disposées en alternance le long de la circonférence du pneumatique. Par exemple, en se déplacement circonférentiellement, un premier fil est disposé axialement intérieurement, un second fil est disposé axialement extérieurement, puis un troisième fil est disposé axialement intérieurement, un quatrième fil est disposé axialement extérieurement, etc, tout le long de la circonférence du pneumatique.

Les figures 2 et 4 illustrent des modes de réalisation de l'invention comportant de préférence deux structures de renfort de type carcasse 9 et 10. Par exemple, la figure 2 illustre un mode de réalisation comparable à l'exemple de la figure 1, mais comportant deux structures de renfort de type carcasse ancrées dans le bourrelet 1. Les angles de ces structures peuvent par exemple être variables du sommet 5 vers l'équateur 12 et également vers la zone basse ou bourrelet du pneumatique.

Au niveau du bourrelet, les deux structures 9 et 10 côtoient les piles 22 de chaque côté de celles-ci. Les fils 21 sont donc entourés de part et d'autre.

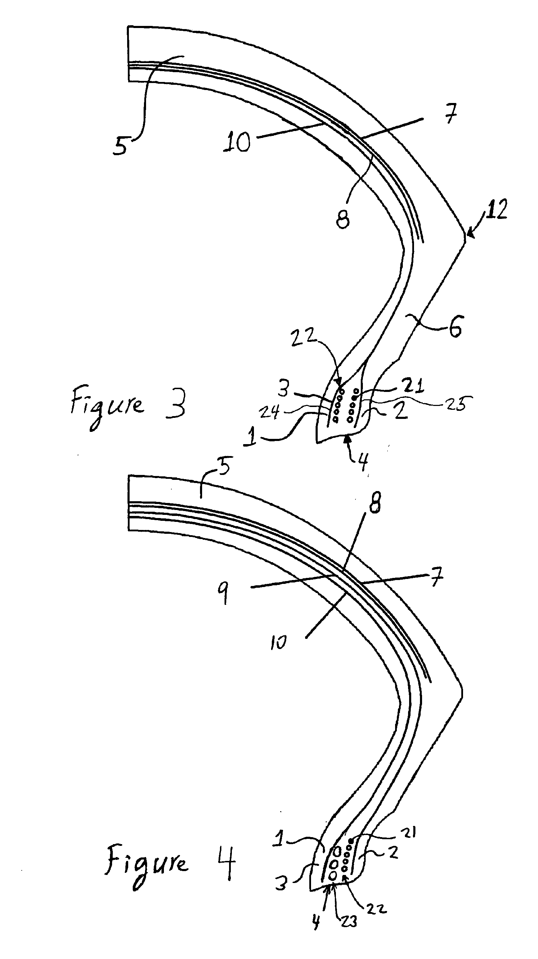

Indépendamment des agencements de structures de renfort, les agencements des piles peuvent varier selon les modes d'exécution. Par exemple, les figures 1 et 2 illustrent des agencements avec une seule pile 22. Les figures 3 et 4 illustrent des exemples avec plusieurs piles. Dans ce dernier cas, on peut alors retrouver des piles similaires, tel qu'illustré à la figure 3, ou des piles dissimilaires, tel qu'illustré en figure 4. Les piles peuvent se distinguer par exemple par le nombre d'enroulements, les types de fils, les diamètres des fils, la nature des fils, etc.

La figure 5 illustre les dimensions Wt et Ht rapportées au profil d'un pneumatique typiquement pour véhicule deux roues. Pour de tels véhicules, on retrouve habituellement des rapports Ht/Wt supérieurs à 0. 15 et même souvent supérieurs à 0.3.

## Revendications

1. Pneumatique pour véhicule à deux roues comportant :
• au moins une structure de renfort de type carcasse ancrée de chaque côté du pneumatique dans un bourrelet dont la base est destinée à être montée sur un siège de jante, chaque bourrelet se prolongeant radialement vers l'extérieur par un flanc, la structure de renfort s'étendant circonférentiellement depuis les bourrelets vers lesdits flancs, les flancs rejoignant radialement vers l'extérieur une bande de roulement dont le rapport Ht/Wt est supérieur à 0.15 ;
• une zone d'ancrage de la structure de renfort comprenant au moins un alignement de fils sensiblement circonférentiels coopérant d'une part avec une première portion de structure de renfort de type carcasse disposée axialement adjacente audit alignement de fils d'un premier côté dudit alignement, et d'autre part avec une seconde portion de structure de renfort de type carcasse disposée axialement adjacente audit alignement de fils d'un second côté dudit alignement.

2. Pneumatique selon la revendication 1, dans lequel au moins une portion des fils dudit alignement et une portion sensiblement voisine des portions de structure coopèrent grâce à la présence d'un mélange caoutchoutique d'ancrage coopérant au moins partiellement avec chacun de ces éléments.

3. Pneumatique selon la revendication 2, dans lequel ledit mélange d'ancrage est un mélange à sensiblement haut module d'élasticité.

4. Pneumatique selon l'une des revendications 1 ou 2, dans lequel ledit alignement comprend un seul fil.

5. Pneumatique selon l'une des revendications 1 ou 2, dans lequel ledit alignement comporte plusieurs fils.

6. Pneumatique selon l'une des revendications 1 à 5, dans lequel lesdits alignements forment une seule pile.

7. Pneumatique selon l'une des revendications 1 à 5, dans lequel lesdits alignements forment plusieurs piles.

8. Pneumatique selon l'une des revendications 1 à 5, comportant une seule structure de renfort de type carcasse se séparant au niveau du bourrelet de façon à sensiblement entourer de part et d'autre les alignements.

9. Pneumatique selon l'une des revendications 1 à 5, comportant deux structures de renfort de type carcasse disposées, au moins au niveau du bourrelet, avec un espacement axial entre les deux, dans lequel est disposé au moins une portion des alignements.

10. Pneumatique selon la revendication 7, dans lequel au moins une pile comporte des fils de différents types.
